# EUROPÄISCHE PATENTSCHRIFT

(11) **EP 1 008 688 B1**
(45) Veröffentlichungstag und Bekanntmachung des Hinweises auf die Patenterteilung: **19.01.2005**
(21) Anmeldenummer: 99123700.9
(22) Anmeldetag: 29.11.1999
(51) Int. Cl.: D06M 15/643

(54) **Verfahren zum Siliconisieren von technischen Geweben**
Process for the treatment with silicons of technical tissues
Procédé de traitement de tissus techniques avec des silicones

(30) Priorität: 11.12.1998 DE 19857269
(43) Veröffentlichungstag der Anmeldung: 14.06.2000
(73) Patentinhaber: Polyamide High Performance GmbH, 42103 Wuppertal (DE)
(72) Erfinder: Sternberg, Britta, 45549 Sprockhövel (DE); Leymann, Frank, 47877 Willich (DE); Bernlöhr, Werner, Dr., 63906 Erlenbach (DE); Siejak, Volker, 47259 Duisburg (DE); Graefe, Hans Albert, 58332 Schwelm (DE); Eichert, Hans Ulrich, 42553 Velbert (DE)
(74) Vertreter: Fett, Günter

(56) Entgegenhaltungen:
- EP-A- 0 758 666
- DD-A- 21 769
- DE-A- 2 166 262
- FR-A- 2 751 980

## Beschreibung

Die Erfindung betrifft ein Verfahren zum Herstellen von mit Silicon beschichteten Geweben aus synthetischen Fasern, insbesondere für den Einsatz in Airbags, durch Beschichten des Gewebes mit einer wäßrigen, Organosiloxane enthaltenden Emulsion.

Das Beschichten von Geweben mit Silicon, auch als Siliconisierung bezeichnet, für den Einsatz in Airbags bietet bekanntermaßen den Vorteil, daß aufgrund des Wär meaufnahmevermögens des Silicons die bei der Aktivierung des Airbags entstehenden heißen Verbrennungsgase und Partikel des Treibsatzes nicht so rasch durch das Gewebe hindurchtreten können. Derartige Beschichtungen tragen somit zum Schutz der Fahrzeuginsassen vor etwaigen Verbrennungen bei.
Weiterhin reduziert eine Beschichtung mit Silicon die Garn an Garn Reibung, die durch Vibrationen hervorgerufen wird, denen das oftmals über Jahre auf engem Raum eingeschlossene Airbaggewebe ausgesetzt ist, was zur Reduktion der Reißfestigkeit führen kann.
Schließlich kann man über die Silikon-Beschichtung auch die Luftdurchlässigkeit des Airbaggewebes reduzieren.
Es versteht sich von selbst, daß die Haftung zwischen der Siliconschicht und dem Airbaggewebe derart sein muß, daß es auch noch nach Jahren der Lagerung nicht zu einem Abblättern der Siliconschicht von dem Gewebe kommt, was die Funktion der Schicht im Falle eines Auslösens des Airbags zumindestens stark beeinträchtigen würde.

Ein derartiges Beschichtungsverfahren ist zum Beispiel in EP-A- 0 758 666 beschrieben. Diese Schrift offenbart wäßrige, Organosiloxane enthaltende Emulsionen, die auf ein nicht getrocknetes Textil aufgebracht werden.

Gemäß EP-A- 0 758 666 erfolgt das Aufbringen des Beschichtungsmaterials während oder direkt im Anschluß an den Waschprozeß. Es eignen sich hierfür Insbesondere Kunstfasergewebe, die gewaschen und getrocknet werden müssen. Man ist darauf bedacht, daß die zur Beschichtung erforderliche Zusammensetzung direkt auf das noch nasse Gewebe sofort nach dem Waschvorgang aufgebracht wird und während des Trocknungsvorgangs vulkanisiert wird.

Das Beschichtungsverfahren aus EP-A- 0 758 666 bietet gegenüber den bisher bekannten derartigen Verfahren den Vorteil, daß mit den dort beanspruchten Organosiloxane enthaltenden Emulsionen die Gewebe ohne vorgeschalteten Trocknungsschritt beschichtet werden können, daß also ein zusätzlicher Beschichtungsvorgang nach dem Trocknen nicht mehr nötig ist und daß dennoch die Haftung der Siliconschicht auf dem Gewebe verbessert ist. Insbesondere bei Geweben aus synthetischen Fasern wird ein Waschvorgang als unumgänglich angesehen.

DE-A-2166262 betrifft wäßrige Alkylhydrogenpolysiloxan-Emulsionen sowie deren Verwendung zur Herstellung von wasserabweisenden Überzügen oder Beschichtungen. In der Beschreibung wird auf die chemische Zusammensetzung dieser Emulsionen vertieft eingegangen. Die Wirksamkeit der wasserabweisenden Eigenschaften der erfindungsgemäßen Emulsionen wird anhand von Untersuchungen mit Baumwollgeweben dargelegt. DE-A-2166262 offenbart allerdings kein Beschichtungsverfahren.

Das der Erfindung zugrundeliegende Problem lag somit darin, ein weiteres, möglichst wirtschaftlicheres Beschichtungsverfahren zu liefern, bei dem die Haftung zwischen Gewebe und Siliconschicht besser als oder wenigstens gleich gut ist wie bei den bekannten Verfahren.

Gelöst wird das erfindungsgemäß zugrundeliegende Problem durch ein Verfahren zum Herstellen von mit Silicon beschichteten Geweben aus synthetischen Fasern, insbesondere für den Einsatz in Airbags, durch Beschichten des Gewebes mit einer wäßrigen, Organosilioxane enthaltenden Emulsion, welches sich dadurch auszeichnet, daß die durch Weben entstandenen Gewebe roh mit der wäßrigen, Organosiloxane enthaltenden Emulsion beschichtet werden.

Als roh" im Sinne der vorliegenden Erfindung ist jedes Gewebe anzusehen, wie es von der Webmaschine erhalten wird und noch nicht gewaschen ist. Insofern können die Gewebe ohne vorgeschalteten Waschvorgang mit der wäßrigen, Organosiloxane enthaltenden Emulsion beschichtet werden. Der Zeitraum, der zwischen dem Weben und dem Beschichten liegt, ist im allgemeinen unkritisch. Lediglich nach sehr langer Lagerzeit kann es von Vorteil sein, wenn das Gewebe vor dem Beschichtungsschritt mit Wasser leicht benetzt wird.

Es zeigt sich, daß mit dem erfindungsgemäßen Verfahren die Haftung zwischen dem Gewebe und der Siliconschicht stärker als die oder wenigstens vergleichbar mit der Haftung ist, die sich unter Einschaltung des im Stand der Technik beschriebenen Waschvorganges ergibt. Das Waschen von Geweben dient dazu, die aus dem Webvorgang und aus vorgelagerten Prozessen stammenden und in späteren Verarbeitungsprozessen störenden Anhaftungen, wie z.B. Ausrüstung und Avivagen, aus dem Gewebe zu entfernen. Diese Anhaftungen werden im allgemeinen als nachteilig für die Haftung zwischen Gewebe und Beschichtung angesehen und es wird demzufolge angestrebt, sie durch einen Waschvorgang zu entfernen. Überraschenderweise hat es sich nun gezeigt, daß bei Durchführung des erfindungsgemäßen Verfahrens auf den Waschvorgang verzichtet werden kann, ohne daß Nachteile in bezug auf die Haftung in Kauf genommen werden müssen.

Das erfindungsgemäße Verfahren zeichnet sich insbesondere dadurch aus, daß die Beschichtung durch einen Tauchvorgang der durch Weben entstandenen rohen Gewebe in die wäßrige, Organosiloxane enthaltende Emulsion durchgeführt wird.

Es ist ebenfalls möglich, die wäßrige, Organosiloxane enthaltene Emulsion durch die Aufpflatsch-Technik auf das rohe Gewebe zu bringen.

Für die Beschichtung eignen sich übliche wäßrige, Organosiloxan enthaltende Emulsionen, besonders bevorzugt für das erfindungsgemäße Verfahren werden jedoch die Emulsionen, die in der EP-A- 0 758 666 beschrieben sind.

Günstig ist es, wenn die Beschichtung des rohen Gewebes so durchgeführt wird, daß die Menge der Beschichtung höchstens 20 %, bevorzugt höchstens15 %, des Gesamtgewichts des Gewebes ausmacht.

Die Auswahl der zum Einsatz kommenden technischen Gewebe, wie offene oder geschlossene Konstruktionen, ist keinen besonderen Einschränkungen unterworfen, bevorzugt werden offenere Gewebekonstruktionen als für unbeschichtet eingesetzte Gewebe.

Auch die Art der Gewebeherstellung ist unkritisch. Es können Gewebe verwendet werden, die auf allen üblichen Webmaschinen, wie z.B. Wasserwebmaschinen, Luftwebmaschinen oder Greiferwebmachinen, hergestellt wurden. Bevorzugt für die vorliegende Erfindung werden Luft- und Greiferwebmaschinen.

Es hat sich als günstig erwiesen, daß die Gewebe, die zum Siliconisieren ausgesucht werden, überwiegend aus synthetischen Filamentgarnen mit einem Gesamttiter von 110 bis 580 dtex, noch bevorzugter von 110 bis 470 dtex und besonders bevorzugt von 110 bis 350 dtex, hergestellt sind. Filamentgarne mit einem Gesamttiter von 110, 235 bzw. 350 dtex haben sich bestens bewährt.

Vorteilhaft für das erfindungsgemäße Verfahren ist, daß zum Siliconisieren Gewebe ausgesucht werden, die überwiegend aus synthetischen Filamentgamen hergestellt sind, deren Filament-Einzeltiter zwischen 2,2 und 4,5 dtex liegt.

Die wäßrigen, Organosiloxane enthaltenden Emulsionen, die für das erfindungsgemäße Verfahren eingesetzt werden, können natürlich noch andere Zusätze enthalten, die sich günstig auf die Eigenschaften des beschichteten technischen Gewebes auswirken. Besonders erwähnenswert sind hierbei Zusätze von Ruß, die als sogenannte Flammhemmer (flame retardants) im Gewebe wirken. Die Anwesenheit derartiger Flammhemmer ist wiederum besonders vorteilhaft beim Einsatz der beschichteten technischen Gewebe in Airbags.

Günstig ist es daher, wenn der wäßrigen Emulsion 1-10 Vol.-%, bevorzugter 2-6 Vol.-%, Ruß bezogen auf das Gesamtgewicht der Emulsion beigemischt werden, bevor die Beschichtung des Gewebes durchgeführt wird.

Die Erfindung wird durch das nachfolgende nicht einschränkende Beispiel näher erläutert.

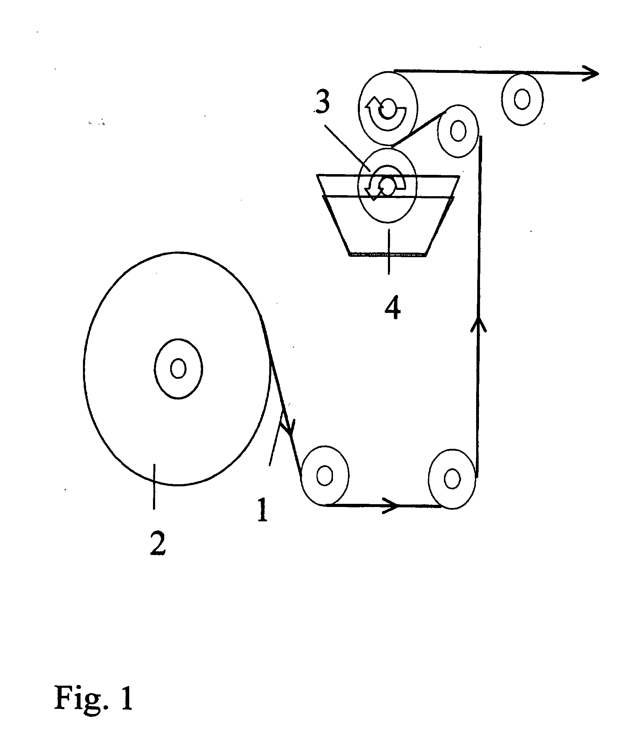

Fig. 1 zeigt schematisch eine Apparatur zur Durchführung des Siliconisierungsprozesses gemäß der Erfindung.

Das Gewebe 1 wird von der Rolle 2 abgewickelt und dann über Umlenkrollen auf eine Benetzungsrolle 3 geführt, durch die es mit der wäßrigen, Organosiloxane enthaltenden Emulsion 4 benetzt wird. Das Gewebe wird anschließend in einem Heizrohr (nicht gezeigt) getrocknet und schließlich aufgewickelt.

Zwei Gewebe aus Polyamid 6.6 Garnen mit einem Gesamttiter von jeweils 470 dtex wurden mittels der in Fig. 1 gezeigten Apparatur silikonisiert. Das erste Gewebe, als Probe 1 bezeichnet, wurde nach dem Weben und vor dem Silikonisieren gewaschen. Das zweite Gewebe, Probe 2, wurde im Rohzustand eingesetzt, d.h. ohne einem Waschvorgang nach dem Weben unterzogen worden zu sein. Dehesive 38197 VP diente jeweils als das Organosiloxan in der wäßrigen Emulsion. Nach dem Trocknen wurde die Haftung zwischen dem Gewebe und der Silikonschicht gemäß DIN 53530 getestet. Weiterhin wurde ein sogenannter Scrub-Test gemäß ISO 5981 durchgeführt.

Die folgenden Ergebnisse wurden erhalten:

| | Haftung | Scrub |
|---|---|---|
| | (N/5 cm) | |
| Probe 1 (gewaschen) | 150 | 1000 |
| Probe 2 (Rohzustand) | 150 | 1000 |

## Patentansprüche

1. Verfahren zum Herstellen von mit Silicon beschichteten technischen Geweben aus synthetischen Fasern, insbesondere für den Einsatz in Airbags, durch Beschichten des Gewebes mit einer wäßrigen, Organosiloxane enthaltenden Emulsion, **dadurch gekennzeichnet, daß** die durch Weben entstandenen Gewebe wie von der Webmaschine erhalten, ohne vorgeschalteten Waschvorgang, mit der wäßrigen, Organosiloxane enthaltenden Emulsion beschichtet werden.

2. Verfahren nach Anspruch 1, **dadurch gekennzeichnet, daß** die durch Weben entstandenen Gewebe roh in die wäßrige, Organosiloxane enthaltende Emulsion getaucht werden.

3. Verfahren nach Anspruch 1 oder 2, **dadurch gekennzeichnet, daß** die Menge der Beschichtung höchstens 15 % des Gesamtgewichts des Gewebes beträgt.

4. Verfahren nach einem oder mehreren der Ansprüche 1 bis 3, **dadurch gekennzeichnet, daß** zum Siliconisieren Gewebe ausgesucht werden, die überwiegend aus synthetischen Filamentgamen mit einem Gesamttiter von 110 bis 580 dtex hergestellt sind.

5. Verfahren nach Anspruch 4, **dadurch gekennzeichnet, daß** zum Siliconisieren Gewebe ausgesucht werden, die überwiegend aus synthetischen Filamentgarnen mit einem Gesamttiter von 110 bis 470 dtex hergestellt sind.

6. Verfahren nach einem oder mehreren der Ansprüche 1 bis 5, **dadurch gekennzeichnet, daß** zum Siliconisieren Gewebe ausgesucht werden, die überwiegend aus synthetischen Filamentgarnen hergestellt sind, deren Filament-Einzeltiter zwischen 2,2 und 4,5 dtex liegt.

7. Verfahren nach einem oder mehreren der Ansprüche 1 bis 6, **dadurch gekennzeichnet, daß** der wäßrigen Emulsion 1-10 Vol.-% Ruß bezogen auf das Gesamtgewicht der Emulsion beigemischt werden, bevor die Beschichtung des Gewebes durchgeführt wird.

8. Verfahren nach Anspruch 7, **dadurch gekennzeichnet, daß** der wäßrigen Emulsion 2-6 Vol.-% Ruß bezogen auf das Gesamtgewicht der Emulsion beigemischt werden, bevor die Beschichtung des Gewebes durchgeführt wird.

## Claims

1. Process for manufacturing industrial woven fabrics made from synthetic fibers and coated with silicone, in particular for use in airbags, by coating the fabric with an aqueous emulsion containing organosiloxanes, **characterized in that** the fabrics obtained from the weaving process, directly from the power loom and without a prior washing step, are coated with the aqueous emulsion containing organosiloxanes.

2. Process according to Claim 1, **characterized in that** the fabrics obtained from the weaving process are immersed in the raw state in the aqueous emulsion containing organosiloxanes.

3. Process according to Claim 1 or 2, **characterized in that** the amount of coating constitutes at most 15% of the total weight of the fabric.

4. Process according to one or more of Claims 1 to 3, **characterized in that** fabrics to be siliconized are selected that are made predominantly from synthetic filament yarns with a linear density of 110 to 580 dtex.

5. Process according to Claim 4, **characterized in that** fabrics to be siliconized are selected that are made predominantly from synthetic filament yarns with a linear density of 110 to 470 dtex.

6. Process according to one or more of Claims 1 to 5, **characterized in that** fabrics to be siliconized are selected that are made predominantly from synthetic filament yarns with a linear density of individual filaments between 2.2 and 4.5 dtex.

7. Process according to one or more of Claims 1 to 6, **characterized in that** 1-10% by volume of carbon black, with respect to the total weight of the emulsion, is mixed with the aqueous emulsion before the coating of the fabric is carried out.

8. Process according to Claim 7, **characterized in that** 2-6% by volume of carbon black, with respect to the total weight of the emulsion, is mixed with the aqueous emulsion before the coating of the fabric is carried out.

## Revendications

1. Procédé de fabrication de tissus techniques en fibres synthétiques enduits de silicone, destinés en particulier à être utilisés dans des coussins de sécurité gonflables, par enduction du tissu avec une émulsion aqueuse contenant des organosiloxanes, **caractérisé en ce qu'**on enduit, avec l'émulsion aqueuse contenant des organosiloxanes, des tissus formés par tissage, qui se trouvent dans l'état où ils sont à leur sortie du métier à tisser et qui n'ont pas subi d'opération intermédiaire de lavage.

2. Procédé conforme à la revendication 1, **caractérisé en ce que** l'on plonge les tissus, bruts de tissage, dans l'émulsion aqueuse contenant des organosiloxanes.

3. Procédé conforme à la revendication 1 ou 2, **caractérisé en ce que** la quantité d'enduit représente au plus 15 % du poids total du tissu.

4. Procédé conforme à l'une des revendications 1 à 3, **caractérisé en ce que** l'on choisit, pour les enduire de silicone, des tissus qui sont principalement fabriqués à partir de filés de filaments synthétiques dont le titre global vaut de 110 à 580 dtex.

5. Procédé conforme à la revendication 4, **caractérisé en ce que** l'on choisit, pour les enduire de silicone, des tissus qui sont principalement fabriqués à partir de filés de filaments synthétiques dont le titre global vaut de 110 à 470 dtex.

6. Procédé conforme à l'une ou plusieurs des revendications 1 à 5, **caractérisé en ce que** l'on choisit, pour les enduire de silicone, des tissus qui sont principalement fabriqués à partir de filés de filaments synthétiques dont les filaments présentent individuellement un titre de 2,2 à 4,5 dtex.

7. Procédé conforme à l'une ou plusieurs des revendications 1 à 6, **caractérisé en ce que** l'on ajoute et mélange à l'émulsion aqueuse 1 à 10 % en volume de suie, par rapport au poids total de l'émulsion, avant d'effectuer l'enduction du tissu.

8. Procédé conforme à la revendication 7, **caractérisé en ce que** l'on ajoute et mélange à l'émulsion aqueuse 2 à 6 % en volume de suie, par rapport au poids total de l'émulsion, avant d'effectuer l'enduction du tissu.
